Europäisches Patentamt

European Patent Office

Office européen des brevets

(11) Veröffentlichungsnummer: **0 039 510**
A1

## EUROPÄISCHE PATENTANMELDUNG

(21) Anmeldenummer: **81103391.9**

(22) Anmeldetag: **05.05.81**

(51) Int. Cl.³: **G 01 F 23/22**

(30) Priorität: **05.05.80 DE 3017148**

(43) Veröffentlichungstag der Anmeldung: **11.11.81**
**Patentblatt 81/45**

(84) Benannte Vertragsstaaten: **AT FR GB IT SE**

(71) Anmelder: **SIEMENS AKTIENGESELLSCHAFT Berlin und München, Postfach 22 02 61, D-8000 München 22 (DE)**

(72) Erfinder: **Meixner, Hans, Dr., Max-Planck-Strasse 5, D-8013 Haar (DE)**

(54) **Niveau-Kontrolle für Bremsflüssigkeit in Kraftfahrzeugen.**

(57) Niveau-Kontrolle für Bremsflüssigkeit in Kraftfahrzeugen.

Kaltleiter-Niveaufühler für Bremsflüssigkeit für Arbeitstemperaturbereich von −40° bis +150°C und Spannungsschwankung von 9 bis 15 Volt bei 12 Volt Soll-Spannung mit einem Kaltleiter-Widerstandselement (2) mit eng bemessen angepasstem spezifischen Widerstand und mit einer Umhüllung (8), die nur wenig grössere Oberfläche als das Kaltleiterelement (2) hat.

SIEMENS AKTIENGESELLSCHAFT    Unser Zeichen
Berlin und München            VPA 80 P 7 0 5 5 E

0039510

## Niveau-Kontrolle für Bremsflüssigkeit in Kraftfahrzeugen.

Die Erfindung betrifft eine Niveau-Kontrolle, wie sie im Oberbegriff des Patentanspruchs 1 angegeben ist.

Aus dem Stand der Technik ist es bekannt, Kaltleiter für die Niveau-Kontrolle eines Flüssigkeitsstandes zu verwenden. Besonders weitverbreitet sind Kaltleiter-Niveaufühler für Überfüllsicherungen bei Öltank-Anlagen. Diese Überfüllsicherungen enthalten einen in vorgegebener Höhe im Tank gehaltenen Kaltleiter (Ceramic PTC), dessen elektrischer Widerstand sich bei Eintauchen in die Flüssigkeit, d.h. dann, wenn der Flüssigkeitsstand die Einbauhöhe des Kaltleiters erreicht hat, stark abfällt.

Ein Kaltleiter ist ein stark temperaturabhängiger elektrischer Widerstand aus Keramik auf der Basis des Bariumtitanats. Im Bereich der Curie-Temperatur dieses Materials erfolgt ein mehrere Zehnerpotenzen in einem relativ engen Temperaturbereich betragender Widerstandsanstieg. Solange der Kaltleiter mit seinen beiden Zuleitungen an die elektrische Spannung angeschlossen ist und noch nicht in die Flüssigkeit eingetaucht ist, wird bei entsprechender Abstimmung von elektrischer Spannung und Widerstand des Kaltleiters aufeinander dieser Kaltleiter bis auf die Curie-Temperatur, d.h. bis zu dem steilen Widerstandsanstieg, aufgeheizt. Sobald aber der Kaltleiter, z.B. aufgrund des Anstiegs des Flüssigkeitsspiegels in die Flüssigkeit eintaucht, erfährt der

Bts 1 Bla / 5.5.1980

0039510

80 P 7055 E

Kaltleiter eine starke Wärmeableitung, die eine starke Abkühlung bewirkt, so daß der Kaltleiter in einen Widerstandsbereich mit niedrigem Widerstand kommt. Die dann auftretende Stromänderung im Stromkreis des Kaltleiters dient als Signal für das Erreichen des Flüssigkeitsstandes in der Einbauhöhe des Kaltleiters.

Es ist eine Aufgabe der vorliegenden Erfindung, eine Niveau-Kontrolle mit einem Kaltleiter anzugeben, der für die Überwachung des Flüssigkeitsstandes der Bremsflüssigkeit in Kraftfahrzeugen zu verwenden ist.

Diese Aufgabe wird mit einer Niveau-Kontrolle nach dem Oberbegriff des Patentanspruchs 1 erfindungsgemäß mit den Merkmalen des Patentanspruchs 1 gelöst. Weitere Ausgestaltungen und Weiterbildungen der Erfindung gehen aus den Unteransprüchen hervor.

Mit Rücksicht auf den bereits langjährigen Stand der Technik erscheint es auf den ersten Blick selbstverständlich und unproblematisch, einen Kaltleiter-Niveaufühler auch für die Niveau-Kontrolle der Bremsflüssigkeit eines Kraftfahrzeuges zu verwenden. Der tatsächliche Versuch belehrt jedoch rasch, daß diese Anwendungsmöglichkeit trotz bereits erprobter sonstiger Anwendung von Kaltleitern als Niveaufühler keineswegs aufgrund der üblichen Überlegungen realisierbar ist.

Für den im Rahmen der Erfindung vorgesehenen Anwendungsfall sind Umgebungstemperaturen von -40° bis 150°C zu berücksichtigen. Durchgeführte Verwendungen von Kaltleitern für Niveaufühler für Bremsflüssigkeit haben aber ergeben, daß mit diesen Niveaufühlern nicht zu unterscheiden war, ob tatsächlich der Flüssigkeitsspiegel der Bremsflüssigkeit abgesunken war oder ob eine stark

0039510

erniedrigte Umgebungstemperatur Ursache für die Signalgabe war. Weiter ist zu berücksichtigen, daß in Kraftfahrzeugen mit erheblichen Unterschieden der Betriebsspannung, nämlich zwischen 9 und 14 Volt, für eine
12 Volt-Anlage zu rechnen ist. Entsprechende relative
Spannungsschwankungen liegen bei anderen Nenn-Spannungen
vor.

Weiter kommt noch das Problem hinzu, daß ein Kaltleiter-
Niveaufühler im Kraftfahrzeug nur eine begrenzte Energie
verbrauchen darf, die etwa auf maximal 4 Watt zu bemessen ist.

Selbst eine Berücksichtigung all dieser vorgenannten
Problempunkte hat sich immer noch nicht als ausreichend
erwiesen, einen wirklich brauchbaren Niveaufühler mit
Kaltleiter für Bremsflüssigkeit zur Verfügung zu stellen.
Es hat sich nämlich gezeigt, daß auch die Wärmeableitung
über die Zuleitungen des Kaltleiter-Elementes hier unverhältnismäßig stark eingeht und die angegebenen Maximalwerte der Wärmeableitung eingehalten werden müssen.
Dabei ist zu berücksichtigen, daß für stationär betriebene Anlagen möglicherweise in Einzelfällen schon verwendete sehr dünne Zuleitungsdrähte im Falle der im Rahmen der Erfindung vorgesehenen Anwendung nicht naheliegen, da im Kraftfahrzeugbetrieb beträchtliche mechanische Belastungen auf die Zuleitungen einwirken. Nicht
zuletzt gehören zu solchen Belastungen auch Einflüsse,
die im Zusammenhang mit Wartungsarbeiten am Fahrzeug
stehen.

Es wurde gefunden, daß eine große Anzahl von Bedingungen einzuhalten sind, die erst zusammenwirkend die
Brauchbarkeit der erfindungsgemäßen Niveau-Kontrolle
erreichen lassen. Die Curie-Temperatur des zu verwendenden Kaltleitermaterials muß in einem raltiv engen Temperaturintervall liegen, dessen Bereich durch die Temperatur gegeben ist, bis zu der hinauf diese Niveau-Kontrolle noch einwandfrei funktionieren muß. Es ist dies die maximal am Ort des Flüssigkeitsbehälters, beispielsweise unter der Motorhaube, auftretende Betriebstemperatur. Sowohl der spezifische elektrische Widerstand des Kaltleitermaterials als auch der elektrische Widerstand des Kaltleiter-Körpers selbst sind in engen Grenzen zu halten, in die auch noch die Betriebsspannung eingeht. Dabei sind diese Werte in Beziehung zu der Wärmeableitung des Kaltleiter-Körpers in der Flüssigkeit und im Alarmfall zur Wärmeableitung in Luft, wobei hierbei wieder die Abmessung des Kaltleiter-Körpers eingeht, die sich aus spezifischem elektrischen Widerstand des Materials und dem elektrischen Widerstand des Körpers in Grenzen ergibt. Bevorzugt ist die Form einer Scheibe mit wie noch zum Ausführungsbeispiel angegebenen Abmessungen. Die sich bei dem in Grenzen bemessenen elektrischen Widerstand ergebende Wärme und Wärmeableitung ist entsprechend der erfindungsgemäßen Bemessung derart, daß einerseits in der Flüssigkeit selbst bei maximaler Betriebstemperatur noch niederohmiges Verhalten des Kaltleitermaterials vorliegt und andererseits bei minimaler Betriebstemperatur im nicht mehr eingetauchten Zustand bereits der hochohmige abgeregelte Zustand des Kaltleitermaterials eintritt. Dabei spielt der Umstand eine Rolle, daß im wesentlichen nur diejenige Außenfläche der Umhüllung eingeht, die in unmittelbarem Wärmekontakt mit der Oberfläche des Kaltleiters bzw. dem auf der Kaltleiter-Oberfläche befindlichen elektrisch leitenden Kontaktanschlußmaterial ist. Wird z.B. eine Umhüllung gewählt, die wie ein Gehäuse nur einseitig an einem dünnen Kaltleiter-Plättchen wärmeleitend/anliegt, so geht für die Umhüllung praktisch nur deren Berührungsfläche mit

0039510
80 P 7055 E

dem Kaltleiter-Plättchen ein, jedoch für ein dünnes Kaltleiter-Plättchen dessen gesamte Oberfläche, nämlich für das einem Merkmal der Erfindung entsprechende Flächenverhältnis, zugrunde zu legen ist. Die Wärmeableitung der Zuleitungen darf vergleichsweise zur Wärmeableitung des umhüllten Kaltleiters an die Flüssigkeit ein Maximum nicht übersteigen. Diese im nachhinein als naheliegend lich erscheinende Bedingung ist keineswegs so selbstverständlich, wie der Entwicklungsablauf gezeigt hat, und zwar deshalb, weil der extrem große Bereich der möglichen Betriebstemperaturen zusammen mit der Leistungsgrenze hier bereits eine entscheidende Rolle spielt.

Weiter ist darauf hinzuweisen, daß die Wahl der Curie-Temperatur $T_C$ und die des spezifischen Widerstandes $\varrho$ in Bezug zueinander stehen, und zwar einerseits hinsichtlich des großen geforderten Bereiches der möglichen Betriebstemperaturen und andererseits wegen der im Fahrzeugbetrieb auftretenden und dementsprechend zu berücksichtigenden starken Schwankungen der Betriebsspannung, z.B. für 12 Volt Soll-Spannung zwischen 9 und 15 Volt. Die erfindungsgemäßen Bemessungen tragen auch diesem Umstand Rechnung und gewährleisten Sicherheit auch gegen die Maxima der Spannungsschwankungen.

Weitere Erläuterungen der Erfindung gehen aus der nachfolgenden Beschreibung zu den Figuren hervor.

Fig.1   zeigt das Kaltleiter-Element,

Fig.2   zeigt ein Diagramm zur Erläuterung der Erfindung.

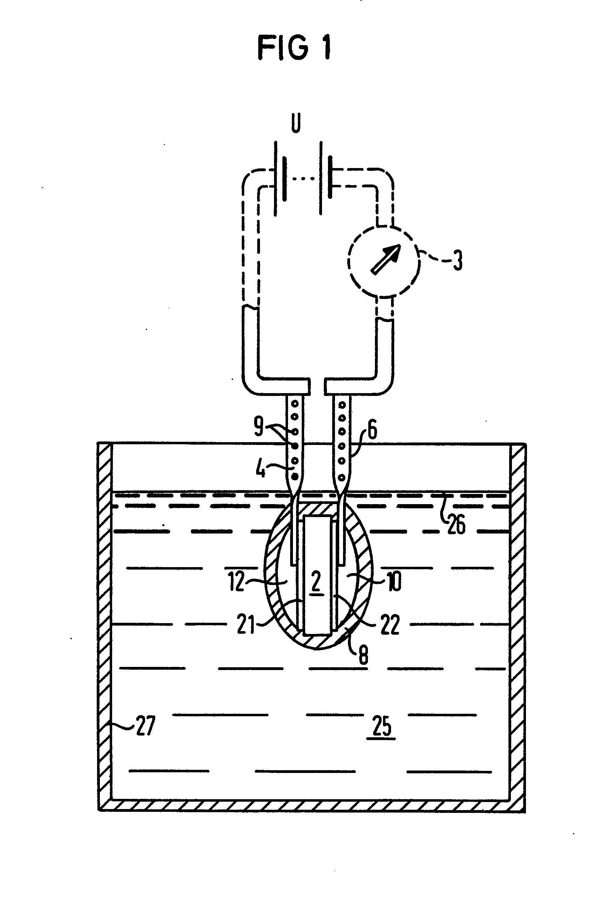

Fig.1 zeigt ein praktisches Ausführungsbeispiel für eine Niveau-Kontrolle mit einem Kaltleiter. Mit 2 ist dabei ein scheibenförmiger Kaltleiter-Körper bezeichnet, der

0039510

80 P 7055 E

z.B. einen Durchmesser von 1,5 bis 1,8 mm und eine Dicke von ca. 0,5 mm hat. Mit 4 und 6 sind die Stromzuführungsleitungen bezeichnet, die jeweils an die wie üblichen Elektroden 21 und 22 des Kaltleiters 2 angeschlossen sind. Zum Beispiel sind die Stromzuführungsleitungen 4 und 6 je ein Band aus Invar mit einem Querschnitt von 0,5 mm$^2$ oder eine Kupferlitze mit 0,018 mm$^2$.

Mit 8 ist eine eng anliegende Polyimid-Umhüllung des Kaltleiters bezeichnet. Der Zwischenraum zwischen der Innenwand der Polyimid-Umhüllung 8 und dem Kaltleiter-Körper 2 ist mit Blei-Lot 10 und 12 ausgefüllt, dessen Menge für das Anlöten der Leitungen 4 und 6 gerade ausreichend bemessen ist. Dieses Blei-Lot 10, 12 dient auch als wärmeleitendes Mittel zwischen Kaltleiter und Polyimid-Umhüllung. Bei dieser Bemessung der Bleimenge ist die Außenoberfläche der Polyimid-Umhüllung bei für den notwendigen mechanischen und chemischen Schutz erforderlicher, vorzugsweise geringer Dicke der Umhüllung nur relativ wenig größer als die Oberfläche des Kaltleiter-Plättchens.

Der wie in Fig.1 dargestellte Kaltleiter-Fühler wird im Vorratsbehälter der Bremsflüssigkeit 25 so eingebaut, daß er bei ausreichender Höhe des Flüssigkeitsstandes 26 der Bremsflüssigkeit in deren Vorratsbehälter 27 in die Flüssigkeit eingetaucht ist. Im eingetauchten Zustand hat der erfindungsgemäß bemessene Fühler einen niedrigen elektrischen Widerstand, und zwar auch bei maximaler Betriebstemperatur. Es fließt ein relativ hoher Strom durch den Kaltleiter-Körper 2. Erhebliche Wärmemenge kann an die Bremsflüssigkeit abgegeben werden.

Sobald der Fühler nach Fig.1 nicht mehr von der Bremsflüssigkeit umgeben ist, heizt sich der Kaltleiter-Körper 2 auf höhere Temperatur auf, bis sein elektrischer Widerstand in den Bereich des starken Widerstandsanstiegs kommt, so daß der Strom durch die Stromzuführungsleitungen 4 und 6 um Größenordnungen zurückgeht. Entsprechend den erfindungsgemäßen Bemessungen ist dies auch noch bei -40°C Betriebstemperatur gewährleistet. Für den vorliegenden Verwendungsfall ist dieser Stromrückgang das Kriterium für die Abgabe eines Warnsignals.

Für die Stromzuführungsleitungen 4 und 6 in der Ausführung eines Invar-Bandes oder einer entsprechend dünnen Kupferlitze ist eine Länge von 20 bis 40 mm zu veranschlagen, die ⸱ zu den üblichen Abmessungen der Vorratsbehälter für Bremsflüssigkeit der Fahrzeuge paßt. Die Enden der Stromzuführungsleitungen werden mit den betreffenden Kabeln des Fahrzeug-(bord-)Kabelnetzes verbunden. Auf die Wärmeableitung an diesen Verbindungsstellen zwischen Stromzuführungsleitung 4, 6 und Kabel kommt es dann praktisch nicht mehr an, da die Stromzuführungsleitungen bereits den gemäß einem Merkmal der Erfindung ausreichenden Wärmewiderstand haben.

Ein wie erfindungsgemäßes Element hat eine Leistungsaufnahme von nur etwa 4 Watt, wie dies im Fahrzeugbetrieb gefordert wird. Die Leistungsaufnahme des erfindungsgemäßen Kaltleiter-Fühlers in 150°C heißer Bremsflüssigkeit ist noch immer größer als die Leistungsaufnahme desselben in -40°C kalter Luft, d.h. im Alarmzustand bei -40° Umgebungstemperatur. Ein guter Sicherheitsabstand liegt vor, wenn die Leistungsaufnahme in Bremsflüssigkeit mit maximaler Temperatur ungefähr das 3-fache der Leistungsaufnahme im nicht mehr eingetauchten Zustand, d.h. in Luft, bei minimaler Umgebungstemperatur ist.

Die beispielsweise als Stromzuführungsleitung verwen-

—8—

dete Kupferlitze mit einem Durchmesser von 0,15 mm hat bei 3 cm Länge einen Wärmewiderstand von mehr als 4400°C/W, der um ein ausreichendes Maß größer ist als der entsprechende Wärmewiderstand eines wie üblicherweise verwendeten 0,6 mm dicken Kupferdrahtes mit 130°C/W. Mit einer wie gemäß einer Ausgestaltung der Erfindung vorgesehenen Stromzuführungsleitung aus Invar, das zwar gute elektrische Leitfähigkeit, aber extrem schlechte Wärmeleitfähigkeit hat, kann ein gleich hoher notwendiger Wärmewiderstand erreicht werden, dies jedoch bei wesentlich höherer mechanischer Stabilität der Stromzuführungsleitungen und damit des gesamten Kaltleiter-Fühlers. Die Invar-Zuleitung kann einen Querschnitt von 0,5 mm$^2$ haben. Eine gemäß einer weiteren Ausgestaltung der Erfindung vorgesehene Perforation eines Stromzuführungsbandes aus Invar läßt noch höheren Wärmewiderstand erreichen.

Zur mechanischen Verstärkung der dünnen Kupferlitze kann diese durch Polyimid-Umhüllung verstärkt sein.

Als Kaltleitermaterial für die erfindungsgemäße Niveau-Kontrolle kann das von der Siemens Aktiengesellschaft gelieferte Material P 450 verwendet werden, zu dem die oben angegebenen geometrischen Abmessungen passen. Das Material hat eine Curie-Temperatur von 450 K.

Für die Umhüllung eignet sich außer dem bereits erwähnten Polyimid auch Tetrafluoräthylen.

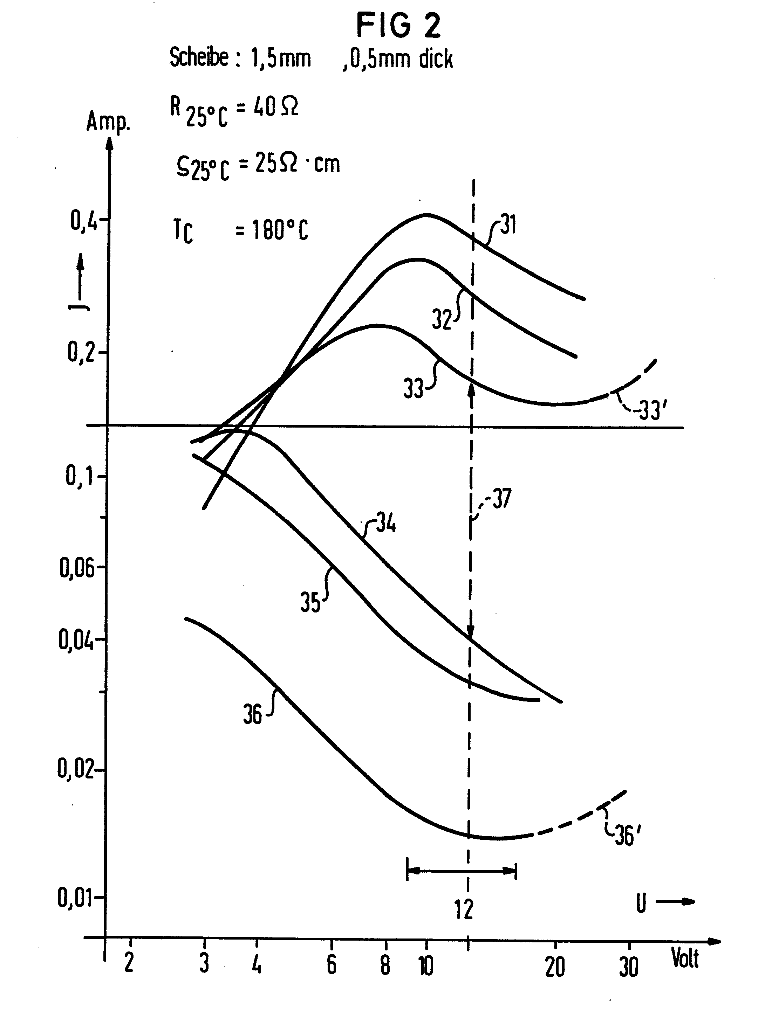

Zur zusätzlichen Erläuterung der Erfindung wird nachfolgend noch das Diagramm der Fig.2 beschrieben. Auf der Abszisse ist die Betriebsspannung und auf der Ordinate der zugehörige Strom durch den Kaltleiter-Fühler aufgetragen. Mit 31, 32 und 33 sind Widerstandskurven des in die Flüssigkeit eingetauchten Kaltleiter-Plättchens

0039510

angegeben, und zwar für -40°C (31), für 20°C (32) und für 35°C (33) Betriebstemperatur. Mit 34, 35 und 36 sind die Kurven für den nicht mehr in die Flüssigkeit eingetauchten, d.h. in Luft befindlichen, Kaltleiter-Fühler angegeben, und zwar wiederum für -40°C (34), für 20°C (35) und für 135°C (36). Mit 37 ist der Aussteuerbereich für die Soll-Betriebsspannung von 12 Volt angegeben, und zwar der Spielraum zwischen den extremen Grenzfällen der Betriebsmöglichkeiten. Man erkennt, daß der Spielraum 37 in den praktisch in Frage kommenden Grenzen der Spannungsschwankungen erhalten bleibt. Mit 33' und 36' sind außerhalb des Extremums in Frage kommender Betriebswerte liegende Bereiche lediglich angedeutet, in denen mit Spannungsdurchschlag zu rechnen wäre.

2 Figuren
5 Patentansprüche

0039510

80 P 7 0 5 5 E

Patentansprüche:

1. Niveau-Kontrolle für Bremsflüssigkeit in Kraftfahrzeugen mit einem an eine elektrische Spannung anzuschließenden, in einer Umhüllung befindlichen Kaltleiter mit Stromzuführungsleitungen, wobei die Umhüllung in in die Flüssigkeit eingetauchtem Zustand allseitig von dieser umgeben ist, g e k e n n z e i c h n e t dadurch, daß für einen Betrieb als Niveau-(26)-Kontrolle der Bremsflüssigkeit (25) in einem Fahrzeug für Betriebstemperaturen zwischen $T_{min} = -40^{o}C$ und $T_{max} = 135$ bis $150^{o}C$ für die Curie-Temperatur ($T_C$) des Materials des Kaltleiters (2) die Bedingung

$$T_C = T_{max} + (30 \text{ bis } 100) K$$

eingehalten ist, daß der spezifische Kaltleiter-Widerstand $\rho$ bei $25^{o}C$

$$\rho_{25^{o}C} = \left[ 15 \text{ bis } 50 \text{ Ohm} \cdot cm \right] \cdot \left( \frac{U_B}{12} \right)^2$$

und der elektrische Widerstand $R_{25^{o}C}$ des Kaltleiter-Körpers

$$R_{25^{o}C} = \left[ 20 \text{ bis } 60 \text{ Cm} \right] \cdot \left( \frac{U_B}{12} \right)^2$$

betragen, daß die mit der Flüssigkeit (25) in Berührung kommende Außenfläche der Umhüllung (8), soweit die Umhüllung wesentlichen Wärmeübergang zwischen dem Kaltleiter (2) und der Flüssigkeit (25) hat, nicht wesentlich größer als die Oberfläche des Kaltleiters (2) ist, und daß die Wärmeableitung der Stromzuführungen (4, 6) um wenigstens etwa eine halbe Größenordnung kleiner als die Wärmeableitung des umhüllten Kaltleiters (2, 8) an dieFlüssigkeit (25) bemessen ist.

2. Niveau-Kontrolle nach Anspruch 1, g e k e n n - z e i c h n e t dadurch, daß für die Stromzuführungen (4, 6) jeweils ein Leiter aus Invar verwendet ist.

3. Niveau-Kontrolle nach Anspruch 2, g e k e n n - z e i c h n e t dadurch, daß der Leiter (4, 6) die Form eines Bandes hat und diese Bänder als Wärmebremse wirkende Perforationen[9] aufweisen.

4. Niveau-Kontrolle nach Anspruch 1, 2 oder 3, g e - k e n n z e i c h n e t dadurch, daß die Umhüllung (8) des Kaltleiters (2) eng an dessen Oberfläche anschließt (Fig.1).

5. Niveau-Kontrolle nach einem der Ansprüche 1 bis 4, g e k e n n z e i c h n e t dadurch, daß das Material der Umhüllung (8) Polyimid ist.

0039510

## FIG 1

# FIG 2

Scheibe : 1,5mm , 0,5mm dick

$R_{25°C} = 40\,\Omega$

$S_{25°C} = 25\,\Omega\cdot cm$

$T_C = 180°C$

| Kategorie | Kennzeichnung des Dokuments mit Angabe, soweit erforderlich, der maßgeblichen Teile | betrifft Anspruch |
|-----------|-----------------------------------------------------------------------------------|-------------------|
| EINSCHLÄGIGE DOKUMENTE | | |
| A | DE - A - 1 665 582 (SIEMENS AG)<br>+ Figur +<br>---- | |

**KLASSIFIKATION DER ANMELDUNG (Int. Cl.³)**

G 01 F 23/22

**RECHERCHIERTE SACHGEBIETE (Int. Cl.³)**

G 01 F 23/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---------------|----------------------------|--------|
| WIEN | 08-07-1981 | STÖGER |

EPA form 1503.1  06.78